# EUROPÄISCHE PATENTANMELDUNG

(11) **EP 1 488 701 A1**
(43) Veröffentlichungstag der Anmeldung: **22.12.2004**
(21) Anmeldenummer: 03013787.1
(22) Anmeldetag: 18.06.2003
(51) Int. Cl.: A21C 9/04

(54) **Verfahren und Vorrichtung zum Garnieren von Lebensmitteln**

(71) Anmelder: Artos S.A., 1150 Luxembourg (LU)
(72) Erfinder: Capovilla, Andrea, 38060 Isera (TN) (IT); Torghele, Claudio, 6962 Viganello (CH)
(74) Vertreter: Oberosler, Ludwig

(57) **Zusammenfassung**

Die Erfindung bezieht sich auf ein Verfahren zum Garnieren von Lebensmitteln, wobei die Garnierzutaten in Taschen oder Taschenbändern (1), zwischen zwei Folienbändern (1u, 1s) eingeschweißt, dem Grundprodukt (2) zugeführt werden und indem diese Taschen über dem Grundprodukt (2) durch Auseinanderreißen der Folienbänder (1u, 1s) entleert werden; dabei werden die Folienbänder über, gemäß der Zuführrichtung (1e) des Taschenbandes (1), hintereinander durchgeführte spitzwinklige Umlenkung (1f, 1g) um einen Winkel möglichst nahe 360° zuerst des unteren Folienbandes (1u) und darauf des oberen Folienbandes (1s) auseinandergerissen; diese Umlenkung erfolgt hintereinander längs einer horizontalen oder einer nur leicht davon abweichenden Linie wodurch die selbe geometrische Position der Zutaten (1d) innerhalb der Tasche (1a) wie ein Abdruck auf der Oberfläche des Grundproduktes (2) oder einer Unterlage rekonstruiert wird.

## Beschreibung

Es sind Vorrichtungen zum maschinellen Herstellen und/oder Garnieren von Fladen, Pizzas oder anderer Lebensmitteln aus folgenden Dokumenten bekannt: WO-A-92 15183 (Synintel), WO 96/32844 (Societe Civile B.A.R.H), EP 1 078 573 A3 (Carpos SA).
Die WO-A-92 15183 (Synintel) beschreibt eine Maschine zur automatischen Herstellung von Crepes, diese werden aus flüssigem Teig hergestellt welcher aus pulverförmigen Zutaten und Wasser zubereitet wird. Diese pulverförmigen Zutaten sind an einem Folienband in Taschen eingeschweißt und fallen in eine darunter vorgesehene Mischvorrichtung indem die darüber herbeigeführte Tasche durch eine Klinge aufgeschlitzt wird während das Band seitlich weiterbewegt und aufgerollt wird. Die Entleerung der Taschen erfolgt nur wenn die Zutaten trocken und nicht verklebt sind, weiters muss das Aufschlitzen der Tasche so erfolgen, dass nicht Reste der Zutaten in Rand-, bzw. Eckbereichen zurückbleiben.

Die WO 96/32844 (Societe Civile B.A.R.H) beschreibt ein Verfahren zum Garnieren von Lebensmitteln z.B. Pizzas oder Torten dabei sind die Garnierzutaten in einfachen oder in mehrteiligen Taschen aus Kunststofffolien eingeschweißt. Die Taschen werden über die zu garnierende Pizza oder Torte welche auf einer nach vertikaler Achse rotierenden Unterlage aufliegt in einer seitlich zur genannten Rotationsachse verlaufenden horizontalen Bahn herangeführt, an der Unterseite in Längsrichtung, diagonal oder quer zur Längsrichtung, aufgeschlitzt und durch Walzen zwecks Entleerung ausgepresst. Durch den Verlauf und die Anordnung des Entleerungsschlitzes, durch die Beeinflussung der Drehbewegung der Pizza, bzw. der Torte, sowie durch Beeinflussung der Längsbewegung der Tasche mit den Zutaten, kann die geometrische Anordnung der Zutaten auf der Oberfläche der Pizza oder der Torte bestimmt, bzw. variiert werden. Dieses Verfahren ist nur für cremeartige, dickflüssige Garnierzutaten geeignet.

Die EP 1 078 573 A3 (Carpos SA) sieht vor, Zutaten zum Garnieren von Pizzas in Form eines Blasenbandes herbeizuführen und diese Blasen über einer Streuvorrichtung zu entleeren welche die Verteilung der Zutaten auf der Oberfläche der darunter während diesem Arbeitsgang verweilenden Pizza durchführt. Diese Vorrichtung ermöglicht es nicht die eventuell unterschiedlichen Garnierzutaten in einer vorbestimmten geometrischen Anordnung auf der Oberfläche der Pizza abzulegen weiters ist diese Vorrichtung nur für pulverförmige, fein zerriebene oder höchstens fein zerstückte Zutaten geeignet, wobei für unterschiedliche Körnungen, bzw.Stückgrößen, auch unterschiedliche Lochungen der Streuvorrichtung vorgesehen werden müssen. Der Einsatz für großstückige, flüssige und/oder cremeartige Zutaten ist nicht möglich. Das restlose Entleeren der aufgerissenen Blasen ist nur bei sehr trockenen feinstückigen oder pulverförmigen und fettlosen Zutaten gegeben welche nicht durch Adhäsion an den Folienbändern festkleben.

Die Erfindung stellt sich die Aufgabe eine Vorrichtung und ein Verfahren zum Garnieren von Lebensmitteln der oben beschriebenen Art zu schaffen, die es ermöglichen, auch verschiedene Garnierzutaten oder Lebensmittel, welche unterschiedliche Konsistenz und/oder Stückgröße haben können, in geometrisch vorbestimmter Position direkt auf das Grundprodukt, auf eine Unterlage (Förderband, Förderplatte), bzw. in eine Vorrichtung (Backvorrichtung, Glaciervorrichtung) abzulegen.

Diese Aufgabe wird erfindungsgemäß dadurch gelöst, dass die Garnierzutaten genau in der selben geometrischen Anordnung wie sie auf dem Grundprodukt oder auf der Unterlage abgelegt, bzw. in eine Vorrichtung eingebracht, werden sollen, in Taschen zwischen zwei lebensmittelgerechten Folien eingeschweißt sind. Diese Taschen sind in gleichen Abständen hintereinander an einem langen, aus zwei parallel verbundenen Folienbändern, bestehendem Band vorgesehen.

Das geometrisch vorbestimmte Ablegen der Zutaten auf dem Grundprodukt erfolgt durch das Heranführen der Taschen exakt über dem zu garnierenden Grundprodukt, das mechanische Öffnen der Taschen erfolgt durch progressives Auseinanderreißen der beiden Folien während das Grundprodukt darunter synchron mit der Folienbewegung in gleicher Richtung wie die Deckfolie geradlinig fortbewegt wird. Durch obige Abläufe fallen die Garnierzutaten auf das darunter synchron fortbewegte Grundprodukt und zwar in gleicher geometrischer Anordnung wie diese in der Tasche zwischen den Folien eingeschweißt waren. Die Garnierzutaten sind vorzugsweise in den Taschen luftdicht eingeschweißt, dabei kann in der Tasche ein mehr oder weniger hohes Vakuum erzeugt werden was dazu beiträgt den Inhalt in der abgelegten Position und Verteilung innerhalb der Tasche durch beidseitiges Anschmiegen der Folien an die dazwischenliegenden Zutaten festzuhalten. Die Erfindung schließt allerdings nicht aus, dass die Zutaten unter Luftausschluss in einer Lebensmittel-konservierenden Atmosphäre eingeschweißt sind.

Um zu verhindern, dass Garnierzutaten durch Adhäsion an einer der Folien, nach dem progressiven Aufreißen der Tasche, kleben bleiben, werden beide Folienbänder über ein Kantenelement, in Bezug auf die Richtung der Zuführung der verschweißten Bänder, um einen Winkel möglichst nahe 360° umgelenkt um anschließend auf je einer abnehmbaren, motorisch angetriebenen Rolle aufgewickelt zu werden. Es ist dabei wichtig, dass der Umlenkradius der Kante über welches die einzelnen Folien gezogen werden möglichst klein ist.
Damit die Garnierzutaten aus der progressiv aufgerissenen Tasche geordnet auf das darunter synchron vorwärts bewegte Grundprodukt fallen, werden die Kantenelemente, über welche die zwei Folienbänder des Taschenbandes geführt werden, so angeordnet dass zuerst das untere Folienband abgezogen wird indem es über das entsprechende Kantenelement geführt und umgelenkt wird während die obere Folie horizontal oder leicht nach unten oder nach oben geneigt weitergeführt wird um sie über das entsprechende zweite Kantenelement zu führen.

Um die Arbeitsgänge beim Austausch des entleerten Taschenbandes gegen ein neues Taschenband zu erleichtern, kann mindestens eines der Kantenelemente verschwenkbar oder beweglich gelagert sein um dadurch das Einführen des Taschenbandes bedienerfreundlich zu gestalten. Die beiden Aufwickelrollen für die beiden Folienbänder zusammen mit der Rolle auf welcher das Taschenband innerhalb des Kühlbehälters aufgewickelt ist, können so gesteuert werden, dass nach Ablauf einer bestimmten Zeit nach der letzten Öffnung einer Tasche, ohne dass die Öffnung einer weiteren Tasche gefordert wird, diese durch Zurückdrehen der Aufwickelrollen für die Folien und der Rolle des Taschenbandes im Kühlbehälter, ins Innere des Kühlbehälters zurückbefördert wird wo sie bis zur nächsten Anfrage konserviert bleibt; natürlich ist in diesem Fall auch die Rolle auf welche das Tachenband aufgewickelt ist durch einen Motor angetrieben.

Das Taschenband kann z.B. über dem Aufreißmechanismus in balgartiger Stapelform innerhalb eines gekühlten Behälters gelagert werden; die Erfindung schließt nicht aus dass, eventuell innerhalb des selben Kühlbehälters, zwei oder mehrere Taschenbänder mit gegebenenfalls unterschiedlichen Garnierzutaten als Stapel z.B. übereinander gelagert sind, die Vorrichtung ist in einem solchen Fall mit den entsprechenden gesonderten Aufreißmechanismen ausgestattet welche, in Bezug auf die Fortbewegung des Grundproduktes, hintereinander angeordnet sind.
Es wird weiters nicht ausgeschlossen, dass das Garnieren des selben Grundproduktes durch mehr als ein Taschenband erfolgt.
Diese Aufbewahrung der Taschenbänder und die entsprechende Entleerungsvorrichtung ermöglichen es, dass der Tascheninhalt bis unmittelbar vor der Entleerung der Taschen unter idealen Bedingungen konserviert werden kann.
Erfindungsgemäß kann in einer Tasche eine einzige Art von Garnierzutaten enthalten sein, es können aber in der selben Tasche auch unterschiedliche Garnierzutaten enthalten sein und auf der Taschenfläche in einer bestimmten geometrischen Anordnung verteilt sein. Weiter besteht auch die Möglichkeit innerhalb von zwei oder mehreren nacheinander am Taschenband angeordneten Taschen unterschiedliche Garnierzutaten vorzusehen welche in entsprechenden Garniervorgängen über das selbe Grundprodukt abgelegt werden; in diesem Fall muss natürlich das Grundprodukt für jeden Garniervorgang wieder in die Garnierposition rückgeführt werden oder es wird die Aufreißvorrichtung dem Grundprodukt nachgeführt um nach dem Garnierzyklus wieder in die Ausgangsposition rückgeführt zu werden.

Die erfindungsgemäße Vorrichtung erfordert auch für pulverförmige, für fein zerriebene und/oder für kleinstückige Zutaten keine zusätzliche Streuvorrichtung; eine solche kann eventuell bei der Abfüllung der Taschen eingesetzt werden. Bei der Abfüllung der Taschen muss natürlich auch auf die geometrische Anordnung der Zutaten, insbesondere der großstückigen Zutaten, geachtet werden. Natürlich muss die Form der Taschen, der Form der zu garnierenden Oberfläche des Grundproduktes entsprechen; z.B. werden die Taschen für das Garnieren von runden Pizzas, von runden Fladen oder von Torten, rund sein und einen etwas kleineren Durchmesser als das Grundprodukt aufweisen.

Das erfindungsgemäße Verfahren ermöglicht es Zutaten sehr unterschiedlicher Konsistenz und/oder Form und/oder Größe als Garnierung auf ein Grundprodukt aufzubringen nachdem die Taschen in welchen diese herangeführt werden progressiv über die gesamte Fläche aufgerissen werden so dass sich auch eventuelle Rand- und Eckbereiche restlos entleeren können. Das Umlenken der einzelnen auseinandergerissenen Folien welche das Taschenband bilden über eine Kante mit möglichst kleinem Durchmesser und um einen möglichst großen Winkel garantiert das sich Loslösen der Zutaten von den Folien wodurch sich der Einsatz von weiteren Mechanismen wie Auspresswalzen, Bürsten und/oder Vibratoren erübrigt.

Das Taschenband bietet sich weiters an in Stapelform nach Art eines Endlosformates gelagert zu werden, wobei eine Schicht des Stapels eventuell von einer einzigen Tasche eingenommen wird und die Bereiche der doppelten Folie des Bandes zwischen den Taschen als leicht flexibles Band den Faltbereich seitlich der Taschen einnehmen. Es wird jedoch nicht ausgeschlossen, dass eine Schicht des Stapels von mehreren Taschen eingenommen werden, sowie dass das Taschenband in Rollenform gelagert wird.

Erfindungsgemäß erfolgt die Zuführung des Taschenbandes an die Aufreißvorrichtung über die motorisch synchron angetriebenen Aufwickelrollen für die einzelnen Folienbänder welche das Taschenband bilden.
Um das Aufreißen der Tasche durch das progressive Auseinanderreißen der verschweißten Folienbänder zu erleichtern wird der Schweißrand an der Stelle wo das Auseinanderreißen beginnt in Richtung gegen die Aufreißbewegung verjüngt. Dadurch wird verhindert, dass plötzlich ein größerer Bereich auseinandergerissen werden muss, was zu höheren Belastungen, zu unerwünschten Verformungen und Unregelmäßigkeiten in der Zuführung führen würde. Die Verjüngung des Schweißrandes hingegen ermöglicht ein graduelles Ansteigen der Belastung und somit eine problemlose regelmäßige und kontollierbare Zuführung des Taschenbandes.

Nachdem die Zuführgeschwindigkeit der Taschen mit den Garnierzutaten mit der Fortbewegung des Grundproduktes übereinstimmen muss um so dadurch eine vorgegebene geometrische Anordnung der Zutaten auf der Oberfläche des Grundproduktes zu erzielen, kann das Taschenband mit bekannten Mitteln (z.B. Lochränder) versehen sein welche eine Fortbewegung ohne Schlupf ermöglichen, oder mit z.B. optisch, magnetisch oder elektronisch lesbaren Marken versehen sein welche den Takt und/oder die Geschwindigkeit des Vorschubes des Grundproduktes bestimmen.

Erfindungsgemäß bietet sich weiters die Möglichkeit an für Grundprodukte welche quadratische oder rechteckige, eventuell in Längsrichtung auch endlose Form, haben die Aufreißgeschwindigkeit der Taschen in Bezug auf die Fortbewegung des darunterliegenden Grundproduktes zu beschleunigen oder zu verlangsamen was eine Streuung, bzw. Verdichtung, der Garnierzutaten auf der Produktoberfläche zur Folge hat.

Die Erfindung schließt nicht aus, dass durch das oben beschriebene Verfahren auch Zutaten, Halb- oder Fertigprodukte auf eine Unterlage (z.B. Transportmittel) oder in eine Vorrichtung präzise positioniert ab-, bzw. eingelegt, werden.

Gemäß einer Weiterentwicklung des Erfindungsgedankens kann das Produkt für das Garnieren eines Grundproduktes, bzw. für die Ablage gemäß einer vorgegebenen geometrischen Anordnung auf einem Transportband oder auf die Fläche einer Vorrichtung oder einer Anlage für die Weiterverarbeitung des Produktes, zwischen zwei Folien eingeschweißt sein welche eine einzelne Tasche bilden ohne zusammen mit weiteren Taschen ein Taschenband zu bilden. In diesem Fall ist es möglich die einzelnen Magazine oder eventuell gekühlten Behälter, unabhängig von der Stückzahl der noch anwesenden Taschen, nachzufüllen. Natürlich kann die Aufreißvorrichtung welche mit einzelnen, nicht zu einem Taschenband verbundenen Taschen, beschickt wird nach dem selben bereits beschriebenen Prinzip arbeiten. Vorteilhafterweise ist jedoch in diesem Fall der Aufreißmechanismus mit einem spezifischen Beschickungsmechanismus ausgestattet oder wird dieser z.B. durch herunterfallende oder -gleitende Taschen beschickt. Um das Aufreißen dieser Einzeltaschen, bzw. das Ergreifen der Folien durch die Aufwickelrollen zu ermöglichen, weisen die Folien welche die einzelnen Taschen bilden mindest an der Seite wo das Aufreißen beginnt z.B. unterschiedliche Länge auf und sind so lang, dass sie, z.B. wie ein Fotofilm, von je einer Aufwickelrolle selbsttätig erfasst werden. Die Einzeltaschen können in, nach dem Inhalt getrennten, Ladebehältern bereitstehen aus welchen sie je einem, dem jeweiligen Ladebehälter zugeordneten, Aufreißmechanismus zugeführt werden oder aus welchen sie einem einzigen gemeinsamen Aufreißmechanismus zugeführt werden.

Die Erfindung wird nachfolgend anhand eines, in den beigelegten Zeichnungen schematisch dargestellten, vorzuziehenden Ausführungsbeispieles einer erfindungsgemäßen Vorrichtung zum Garnieren von Lebensmitteln näher erklärt, dabei erfüllen die Zeichnungen lediglich erklärenden nicht begrenzenden Zweck.

Die Fig. 1 zeigt in Seitenansicht eine erfindungsgemäße Vorrichtung zum Garnieren von Pizzas, von runden Fladen oder von Torten mit zwei nacheinander angeordneten Aufreißvorrichtungen für zwei Taschenbändern welche in Stapelform übereinander innerhalb eines einzigen Kühlbehälters untergebracht sind; der Kühlbehälter ist im Schnitt dargestellt.

Die Fig. 2 zeigt einen der in Fig. 1 dargestellten Aufreißmechanismen in vergrößertem Maßstab während des Aufreißens einer Tasche und mit einer darunter vorbeigeführten Pizza auf deren Oberfläche die Garnierzutaten abgelegt werden.

Die Fig. 3 zeigt in Draufsicht einen Teil eines Tachenbandes für die in Fig. 1 dargestellte Vorrichtung mit den eingeschweißten Garnierzutaten (Wurstscheiben).

Die Fig. 4 zeigt in schematischer Seitenansicht einen Aufreißmechanismus mit einem der Kantenelemente in nach unten geschwenkter Position um das Einführen des Anfangs des Taschenbandes zu erleichtern.

Die Fig. 4a zeigt in Seitenansicht den selben in Fig. 4 dargestellten Aufreißmechanismus mit dem schwenkbar gelagerten Kantenelement in Arbeitsstellung während dem Aufreißen einer Tasche.

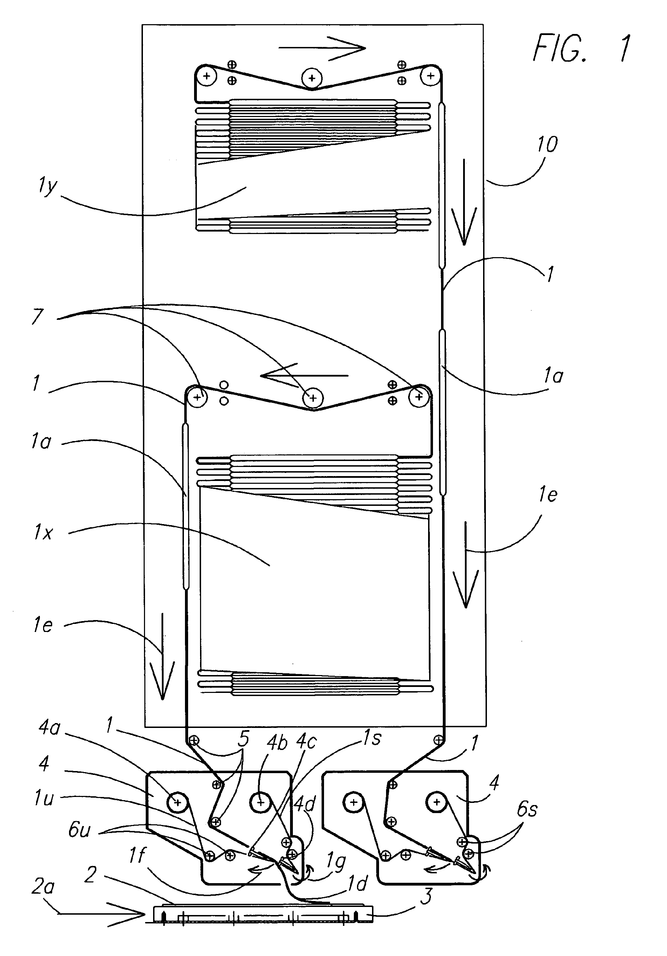

Ein Taschenband 1, welches aus zwei Folienbändern aus nahrungsmittelfreundlichem Kunststoff besteht zwischen welchen in hintereinander auf Abstand angeordneten taschenförmigen Bereichen 1a Garnierzutaten (1d) eingeschweißt sind, ist in Stapelform 1x, in der Weise eines Endlosformates, innerhalb eines eventuell gekühlten Behälters 10 gelagert (Fig. 1). Über diesem Stapel 1x ist ein zweiter Stapel 1y eines Taschenbandes 1 in dessen Taschen 1 a gleiche oder unterschiedliche Garnierzutaten eingeschweißt sind untergebracht.

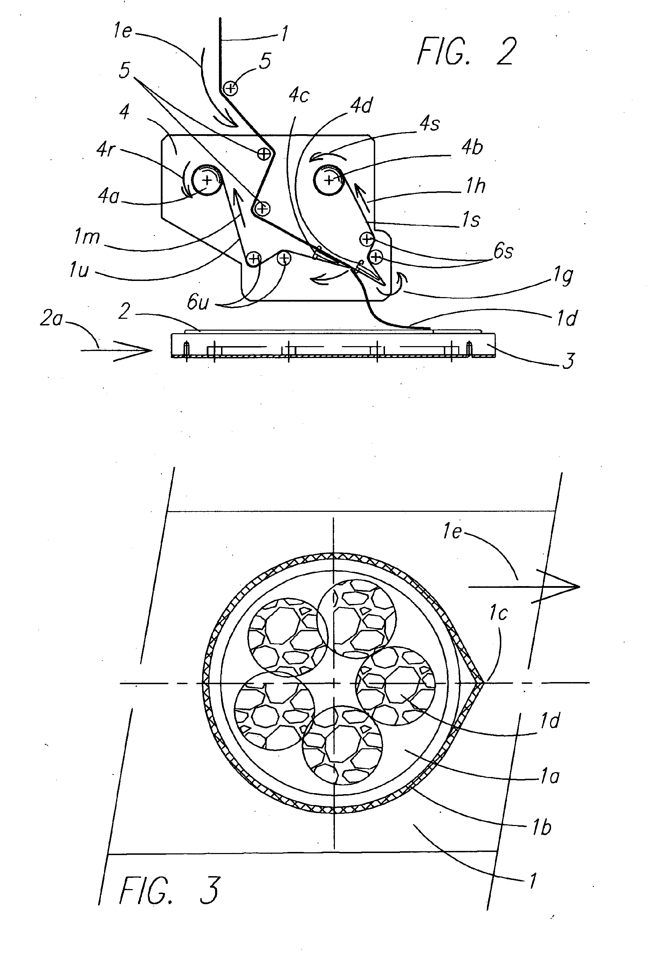

Unterhalb des Kühlbehälters 10 sind für jedes der Taschenbänder 1 Aufreißmechanismen 4 vorgesehen welche, in Bezug auf die horizontale Fortbewegung 2a der auf einer Auflage 3 abgelegten Pizza 2, hintereinander angeordnet sind.
Der Aufreißmechanismus 4 (Fig. 2) weist je eine Aufwickelrolle 4a, 4b für die beiden Folienbänder 1 u, 1 s welche das Taschenband 1 bilden, auf. Diese Aufwickelrollen 4a, 4b sind mit gleicher Drehzahl, vorzugsweise über einen einzigen Motor mit gleicher Drehrichtung 4r, 4s angetrieben. Das Taschenband 1 wird vom Stapel 1x über die Führungsrollen 7 vom Kühlbehälter 10 entnommen indem es seitlich am Stapel 1x nach unten geführt 1e wird und über mehrere Führungsrollen 5 in die Aufreißvorrichtung 4 eingeführt 1e wird. Nach der letzten Führungsrolle 5 wird das Taschenband 1 nach unten geneigt oder auch horizontal oder leicht nach oben geneigt über ein erstes Kantenelement 4c geführt und das untere Folienband 1 u über dessen Kante in einem Winkel von möglichst nahe 360° umgelenkt 1f und über die Führungsrollen 6u zur entsprechenden Aufwickelrolle 4a geführt. Das obere Folienband 1 s hingegen wird in einigem Abstand vom ersten Kantenelement 4c über das Kantenelement 4d um einen Winkel von möglichst nahe 360° umgelenkt 1g und über die entsprechenden Führungsrollen 6s der entsprechenden Aufwickelrolle 4b zugeleitet 1 h. Das progressive Aufreißen der Taschen 1 a geschieht also durch Auseinanderreißen der, das Taschenband 1 bildenden, verschweißten 1b Folienbänder 1 u, 1s. Um das Aufreißen der Taschen 1 a zu erleichtern und die entsprechenden Belastungen zu reduzieren ist der Schweißrand an dem, in Vorschubrichtung 1e des Taschenbandes 1, vorne liegenden Bereich 1c verjüngt.
Die Bewegung 1e des Taschenbandes 1 läuft während der Garnierung der Pizza 2 synchron und mit der selben Geschwindigkeit ab wie die Vorwärtsbewegung 2a der Pizza 2, dadurch nehmen die auf die Oberfläche der Pizza 2 fallenden Zutaten 1 d aus der progressiv aufgerissenen Tasche 1a in der selben geometrischen Anordnung auf die Pizza 2 wie diese in der Tasche angeordnet waren. Das Loslösen der Zutaten 1 d welche eventuell an den Folienbändern 1 u, 1 s haften, wird durch die spitzwinklige Umlenkung 1f, 1g der Folienbänder um die Kantenelemente 4c, 4d erreicht.

An den entsprechenden Aufwickelrollen 4a, 4b können Spulröhren verdrehfest aufgeschoben sein an welchen die jeweiligen Enden der Folienbänder 1u, 1s befestigt sind um durch die Drehung 4r, 4s die Folienbänder 1u, 1s aufzuspulen und nach dem Aufreißen der letzten Tasche 1a eines Taschenbandes 1 entnommen werden zu können.
Um den Synchronismus zwischen der Bewegung 1e des Taschenbandes 1 und der Vorwärtsbewegung 2a der Pizza 2 zu realisieren, kann das Taschenband 1 mit z.B. optisch oder magnetisch erkennbaren Marken versehen sein welche den Takt und/oder die Geschwindigkeit der Vorwärtsbewegung 2a der Pizza 2 vorgeben. Dieser Synchronismus ist eventuell nur während der Aufreißfase wichtig wenn auf der Oberfläche des Grundproduktes die Ablage der Zutaten 1 d mit der selben Geometrie erfolgen soll wie diese in der Tasche 1a vorgegeben ist.
Bei Grundprodukten mit quadratischer, rechteckiger oder endloser Form kann die Geschwindigkeit der Vorwärtsbewegung 2a bezüglich der Bewegung 1e des Taschenbandes 1 auch unterschiedlich sein wodurch eine größere Streuung, bzw. eine Verdichtung, der Zutaten auf der Oberfläche des Grundproduktes erreicht werden kann.
Die Erfindung schließt nicht aus, dass die Stapel 1x, 1y, anstatt mit horizontaler Schichtung, mit vertikaler Schichtung oder in Rollenform abgelegt sein können, weiters können die einzelnen Schichtungen eine oder auch mehrere Taschen umfassen.
Erfindungsgemäß können in einem selben Behälter 10 auch mehrere Stapel 1x, 1y von Taschenbändern 1 untergebracht sein.

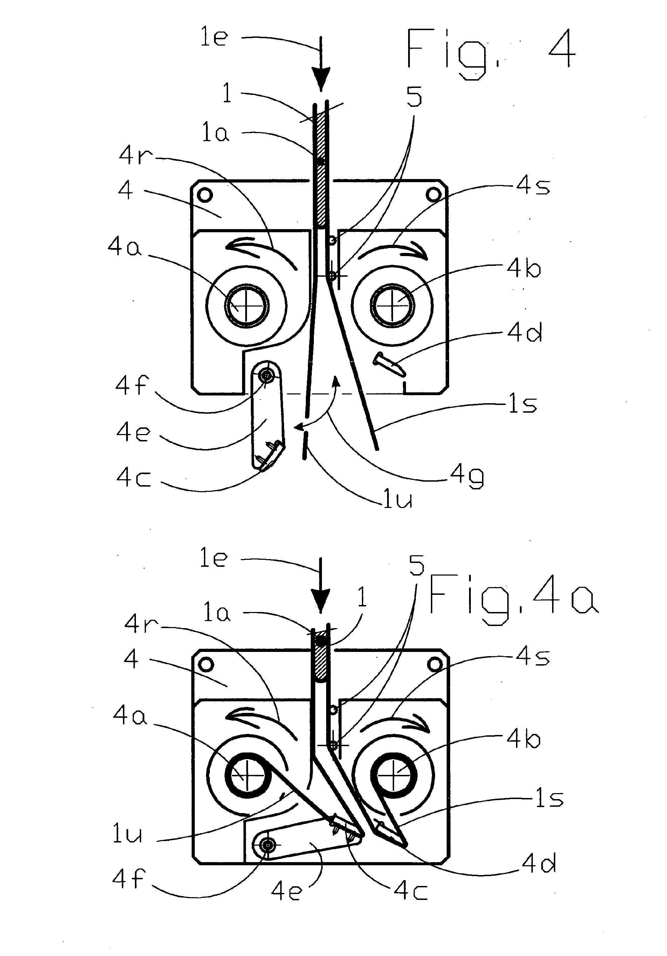

Das Einfädeln des Anfangs des Taschenbandes 1 mit Taschen 1a in den Aufreißmechanismus wird erfindungsgemäß erleichtert indem mindestens eines der Kantenelemente 4c, 4d verstellbar, z.B. an einem schwenkbar gelagertem 4f Arm 4e, befestigt ist (Fig. 4, 4a), dabei wird eine andersartige bewegliche Lagerung für eines oder beide Kantenelemente 4c, 4d nicht ausgeschlossen. Das Einfädeln des Taschenbandes erfolgt von oben in Richtung 1 e indem der Anfang des neuen Taschenbandes frei nach unten hängend, einseitig an den Führungsrollen 5 anliegend, eingeführt wird. Die beiden das Taschenband 1 bildenden Folienbänder 1s, 1u hängen beim Einfädeln des Taschenbandes 1 frei zwischen dem feststehenden Kantenelement 4d und dem um die Schwenkachse 4f schwenkbar 4g gelagerten Kantenelement 4c welches in nach unten geschwenkter Position des Armes 4e vom Kantenelement 4d distanziert ist, nach unten. Der Abstand zwischen den Kantenelementen 4c, 4d erleichtert das Durchziehen der Folienbänder 1s, 1u (Fig. 4). Anschließend wird das Folienband 1s über das Kantenelement 4d geführt um mit dem Bandanfang an der Aufwickelrolle 4b, bzw. an einem daran abziehbar aufgeschobenen Rohrstück, befestigt zu werden. Das zweite Folienband 1u hingegen wird über das Kantenelement 4c geführt wobei dieses in hochgeschwenkter Position (Fig. 4a) gehalten wird und mit dem Bandanfang an der Aufwickelrolle 4a, bzw. an einem daran abziehbar aufgeschobenen Rohrstück befestigt wird. Durch die Aufwickelbewegung 4r der Aufwickelrolle 4a wird der schwenkbare 4g Arm 4e in hochgeschwenkter, durch einen Anschlag definierten, Position gehalten. Dies geschieht durch die auf das Filmband 1u wirkende Zugkraft und dadurch, dass die Schwenkachse 4f des Arms 4e unterhalb der Wirkungslinie der auf das Folienband 1u wirkende Zugkraft liegt.

Die Zutaten 1d innerhalb einer Tasche 1a können gleichartig und/oder gleicher Stückgröße oder verschiedenartig und/oder unterschiedlicher Stückgröße sein, weiters können sämtliche Taschen 1 a eines Taschenbandes gleichen Inhalt aufweisen oder auch, in der selben Reihenfolge über zwei oder auch mehrere Taschen 1a unterschiedlichen Inhalt aufweisen wobei, falls diese Inhalte auf das selbe Grundprodukt aufzubringen sind, das Grundprodukt unter dem selben Aufreißmechanismus 4 entsprechend oft rückgeführt werden muss um wiederholt mit den entsprechenden Zutaten belegt zu werden.
Um eine unterschiedliche Kombination von Garnierungen an der selben Produktionslinie durchführen zu können werden, eventuell für jede Garnierzutat, spezifische Taschenbänder 1 vorgesehen deren Aufreißmechanismen 4 hintereinander angeordnet sind; wird eine Garnierzutat nicht gewünscht so wird der entsprechende Aufreißmechanismus nicht betätigt und das Grundprodukt darunter weiterbewegt.

## Patentansprüche

1. Verfahren zum Garnieren von Lebensmitteln, wobei die Garnierzutaten in Taschen oder Taschenbändern (1) zwischen zwei Folienbändern (1 u, 1 s) eingeschweißt dem Grundprodukt (2) zugeführt werden und indem diese Taschen über dem Grundprodukt (2) durch Auseinanderreißen der Folienbänder (1u, 1s) entleert werden, **dadurch gekennzeichnet, dass** das Auseinanderreißen der Folienbänder (1u, 1s) über, gemäß der Zuführrichtung (1e) des Taschenbandes (1), hintereinander durchgeführte spitzwinkelige Umlenkung (1f, 1g) um einen Winkel möglichst nahe 360° zuerst des unteren Folienbandes (1u) und darauf des oberen Folienbandes (1 s) erfolgt, dass diese Umlenkung hintereinander längs einer horizontalen Linie oder nur leicht von einer solchen abweichenden nach oben oder nach unten geneigten Linie erfolgt und dass die selbe geometrische Position der Zutaten (1d) innerhalb der Tasche (1a) wie ein Abdruck auf der Oberfläche des Grundproduktes oder einer Unterlage rekonstruiert wird.

2. Verfahren zum Garnieren von Lebensmitteln gemäß Anspruch 1, **dadurch gekennzeichnet, dass** durch das Variieren der Zuführbewegung (1e) des Taschenbandes (1) in Bezug auf die Vorwärtsbewegung (2a) des Grundproduktes (2), oder auch umgekehrt, bei gleichmäßiger Verteilung der Zutaten (1d) innerhalb der Taschen (1a) und im Fall einer quadratischen, rechteckigen oder endlosen Form des Grundproduktes, diese Zutaten (1d) auf der Oberfläche des Grundproduktes in Richtung dessen Vorwärtsbewegung (2a) gestreut, verdichtet oder mit variirender Dichte abgelegt werden.

3. Verfahren zum Garnieren von Lebensmitteln gemäß Anspruch 1, **dadurch gekennzeichnet, dass** das Aufbringen unterschiedlicher Garnierzutaten (1d) auf die Oberfläche eines selben Grundproduktes (2) durch das Einschweißen sämtlicher Garnierzutaten in die selbe Tasche (1a) und deren Entleerung erfolgt.

4. Verfahren zum Garnieren von Lebensmitteln gemäß Anspruch 1, **dadurch gekennzeichnet, dass** das Aufbringen unterschiedlicher Garnierzutaten (1d) auf die Oberfläche eines selben Grundproduktes (2) durch das Einschweißen der unterschiedlichen Garnierzutaten, bzw. Garnierzutatengruppen, in gesonderte hintereinander am Taschenband (1) angeordnete Taschen (1a) und deren Entleerung über den selben Aufreißmechanismus (4) erfolgt.

5. Verfahren zum Garnieren von Lebensmitteln gemäß Anspruch 1, **dadurch gekennzeichnet, dass** das Aufbringen unterschiedlicher Garnierzutaten (1d) auf die Oberfläche eines selben Grundproduktes durch das Einschweißen der unterschiedlichen Garnierzutaten, bzw. Garnierzutatengruppen, in Taschen (1a) verschiedener Taschenbänder (1) und deren Entleerung hintereinander an entsprechenden Aufreißmechanismen (4) erfolgt.

6. Verfahren zum Garnieren von Lebensmitteln gemäß Anspruch 1, **dadurch gekennzeichnet, dass** nach Ablauf einer bestimmten Zeit ab dem Aufreißen einer Tasche des Taschenbandes (1) ohne dass eine nächste Tasche aufgerissen wurde, die Rolle des Taschenbandes im Kühlbehälter und die Aufwickelrollen des Aufreißmechanismus (4) zurückgedreht werden bis sich die letzte nicht aufgerissene Tasche innerhalb des Kühlbehälters befindet.

7. Verfahren zum Garnieren von Lebensmitteln gemäß Anspruch 1, **dadurch gekennzeichnet, dass** die einzelnen, Garnierzutaten(1d) enthaltenden, Taschen in einzelnen Lademagazinen enthalten sind von wo sie jeweils einem dem Lademagazin zugeordneten Aufreißmechanismus (4) zugeführt werden oder dass die einzelnen Taschen aus den verschiedenen Lademagazinen einem einzigen Aufreißmechanismus (4) zugeführt werden.

8. Vorrichtung zum Garnieren von Lebensmitteln gemäß dem in den Ansprüchen 1 bis 7 angeführten Verfahren, bestehend aus einem Behälter (10) für die Aufbewahrung eines Taschenbandes (1) aus welchem dieses einem Aufreißmechanismus (4) zugeführt (1e) wird indem die beiden, das Taschenband (1) bildenden, Folienbänder (1f, 1g) auf getrennt angeordneten Aufwickelrollen (4a, 4b) aufgewickelt (4r, 4s) werden, **dadurch gekennzeichnet, dass** vor den Aufwickelrollen je ein Kantenelement (4c, 4d) vorgesehen ist über dessen Kante mit möglichst kleinem Radius das jeweilige Folienband (1u, 1s) von der Zuführbahn unter Bildung eines Winkels von möglichst nahe 360° umgelenkt (1f, 1g) wird und dass diese Kantenelemente (4c, 4d) zueinander beabstandet gemäß einer horizontalen Linie oder einer dazu leicht nach oben oder nach unten geneigten Linie angeordnet sind.

9. Vorrichtung zum Garnieren von Lebensmitteln gemäß Anspruch 8, **dadurch gekennzeichnet, dass** ein oder beide Kantenelemente (4d, 4c) schwenkbar (4g) oder verschiebbar gelagert sind um, in Abwesenheit der Folienbänder (1u, 1s) eine Distanzierung zwischen den Kantenelementen zu bewirken um das Einfädeln der Folienbänder zu erleichtern und dass die Zugkraft welche auf die Folienbänder (4d, 4c) während des Aufwickelns (4r, 4s) auf die entsprechenden Aufwickelrollen wirkt, die Beibehaltung der Arbeitsposition der Kantenelemente bewirkt.

10. Vorrichtung zum Garnieren von Lebensmitteln gemäß Anspruch 8, **dadurch gekennzeichnet, dass** zumindest während dem progressiven Aufreißen der Taschen (1a) die Zuführbewegung (1e) des Taschenbandes (1) mit der Vorwärtsbewegung (2a) des Grundproduktes (2) synchron abläuft und gegebenenfalls durch, längs dem Taschenband (1) vorgesehene z.B. optisch oder magnetisch lesbare Marken, eine der beiden Bewegungen (1e, 2a) bezüglich der anderen Bewegung gesteuert wird.

11. Vorrichtung zum Garnieren von Lebensmitteln gemäß Anspruch 8, **dadurch gekennzeichnet, dass** das Grundprodukt (2) zwecks eines wiederholten Durchlaufs (2a) unter der selben Aufreißvorrichtung (4) in einen Bereich vor der Aufreißvorrichtung (4) rückgeführt wird um während der folgenden neuerlichen Vorwärtsbewegung (2a) wiederholt unter der gleichen Aufreißvorrichtung garniert zu werden.

12. Vorrichtung zum Garnieren von Lebensmitteln gemäß Anspruch 8, **dadurch gekennzeichnet, dass** zwecks eines wiederholten Garnierens des Grundproduktes (2) unter der selben Aufreißvorrichtung (4) diese dem Grundprodukt (2) in Richtung dessen Vorwärtsbewegung (2a) nachgeführt wird und darauf in die Ausgangsposition der ersten Garnierphase rückgeführt wird.

13. Vorrichtung zum Garnieren von Lebensmitteln gemäß Anspruch 8, **dadurch gekennzeichnet, dass** im Falle von Grundprodukten quadratischer, rechteckiger oder endloser Form, zwecks gestreuter, bzw. verdichteter Ablage der Garnierzutaten auf der Oberfläche des Grundproduktes, die Geschwindigkeit der Zuführbewegung (1e) des Taschenbandes (1) bezüglich der Geschwindigkeit der Vorwärtsbewegung (2a) des Grundproduktes variiert werden und dass diese Variation durch, längs dem Taschenband (1) vorgesehenen, z.B. optisch oder magnetisch lesbare Marken vorgegeben ist.

14. Vorrichtung zum Garnieren von Lebensmitteln gemäß Anspruch 8, **dadurch gekennzeichnet, dass** die Schweißnaht (1b) durch welche die Zutaten (1d) zwischen den, das Taschenband (1) bildenden, Folienbändern (1u, 1s) eingeschweißt sind sich, gemäß der Längsachse des Taschenbandes (1) in Richtung Zuführbewegung (1e), in verjüngter Ausformung (1c) erstreckt und dass die Zutaten (1d) zwischen den Folienbändern (1u, 1s) durch Adhäsion und/oder durch ein mehr oder weniger hohes Vakuum in ihrer vorgegebenen Position festgehalten werden.
